# EUROPEAN PATENT APPLICATION

(11) **EP 4 712 309 A1**
(43) Date of publication of application: **18.03.2026**
(21) Application number: 24200089.1
(22) Date of filing: 12.09.2024
(51) Int. Cl.: H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: STARING, Antonius Adriaan Maria, 5656 AG Eindhoven (NL); AGAFONOV, Aleksei, 5656 AG Eindhoven (NL); VELTMAN, Eddy Gerrit, 5656 AG Eindhoven (NL); IBEN HAJ DAHMEN, Ghassen, 5656 AG Eindhoven (NL)
(74) Representative: Philips Intellectual Property & Standards

(57) **Abstract**

A power receiver (105) comprises a receiver coil (107) extracting power from an electromagnetic power transfer signal generated by a power transmitter (101). A variable load (511) applies modulation loading to the receiver coil (107). A data transmitter (509) transmits data symbols to the power transmitter (101) by controlling the variable load (511) to load modulate the power transfer signal during communication time intervals that are interspersed by non-communication time intervals during which no data is transmitted to the power transmitter (101). The data transmitter (509) varies the variable load (511) to apply a modulation loading pattern for each data symbol where the modulation loading pattern for each possible data symbol value is different. The data transmitter controls the variable load (511) to apply a repeating loading variation pattern during non-communication time intervals. The repeating loading variation pattern has a power spectral density differing less than 10dB from that of the modulation loading patterns and thus the spectral shapes are closely matching.

## Description

### FIELD OF THE INVENTION

The invention relates to wireless power transfer and in particular, but not exclusively, to a power transfer system such as one following the Qi wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

Based on the Qi Specification, an approach known as the Ki specification is being developed for high power applications, such as specifically for Kitchen appliances.

In order to support efficient wireless power transfer, wireless power transfer systems, such as Qi or Ki based systems, utilize substantial communication between the power transmitter and the power receiver. For communication systems such as Qi, communication from the power receiver to the power transmitter is arranged to use load modulation of the power transfer signal. Communication from the power transmitter to the power receiver may accomplished by modulating the power transfer signal using amplitude or frequency modulation.

Whereas communicating using load modulation of the power transfer signal transferring power to the power receiver may provide efficient operation in many scenarios, it also tends to have some associated disadvantages. For example, the load modulation may tend to introduce some electrical noise including both noise to the signals of the devices as well as radiated electromagnetic noise. The load modulation may increase electromagnetic interference to other devices and maintaining sufficient or optimal electromagnetic compatibility has been found to be challenging.

It has also been found in practice that load modulation may result in the introduction of undesired spurious variations, and potentially oscillations, in the drive signal and the power transfer signal. The power transfer path in a wireless power transfer system tends to include a significant amount of inductance and tends to have a resonant behavior. As such load modulation tends to affect the power transfer path and indeed the communication path. Thus, the load modulation also results in noise and interference to the communication itself (self interference). This differs substantially from other communication systems where random noise or interference from other transmissions are the main causes of transmission errors.

The variations of the power transfer signal and drive signal, such as specifically oscillations may further result in disturbances and variations in the voltage at the output of the power receiver's rectifier while data packet transmissions are ongoing, and/or at the start and/or of the data communication

Another disadvantage is that the load modulation of the power transfer signal may result in acoustic noise. Such noise may result from the impact on mechanical elements of the variations to the electromagnetic field caused by the load modulation, and specifically it may cause mechanical elements to move and vibrate resulting in potential acoustic noise being generated.

In some cases, load modulation communication as e.g. used in the initial versions of the Qi Specifications may not have perfect reliability and some bit errors may possibly occur in some cases. For example, high levels of noise or self-interference may result in bit errors and/or may require an increased modulation depth which may result in increased electrical or acoustic noise resulting from the load modulation.

In order to mitigate or reduce some disadvantageous effects of load modulation, it has been proposed to use a chip sequence based communication where each data symbol may be represented by a sequence of chips that are load modulated onto the power transfer signal. An example of such an approach is described in WO2023/222419A1.

However, whereas such approaches may improve communication in many implementations, it tends to not result in ideal performance and a number of disadvantages may persist. For example, in some scenarios, the communication quality and reliability may not be ideal. In particular, a number of the disadvantages may not be fully removed and e.g. variations in the drive signal and in the power receiver output voltage may still occur. Further, audio noise and/or electromagnetic interference may still occur.

Hence, an improved approach would be advantageous, in particular, an improved approach for load modulation allowing increased flexibility, reduced cost, reduced complexity, improved power transfer operation, increased reliability, reduced communication errors, improved backwards compatibility, improved electromagnetic compatibility, reduced electrical and/or acoustic noise, improved communication, a more stable power transfer, reduced power transfer variations, reduced variations of the power transfer signal, reduced variation of a received power signal at the power receiver, reduced variation of an induced voltage at the power receiver coil, reduced variation of an induced voltage of the power receiver coil and/or a rectified voltage generated from the power transfer signal at the power receiver, and/or increased stability, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power receiver for wirelessly receiving power from a power transmitter via an electromagnetic power transfer signal, the power receiver comprising: an input circuit comprising a receiver coil arranged to extract power from the power transfer signal; a variable load coupled to the input circuit and arranged to apply a modulation loading to the input circuit; a data transmitter arranged to transmit data symbols to the power transmitter by controlling the variable load to load modulate the power transfer signal during communication time intervals that are interspersed by non-communication time intervals during which no data is transmitted to the power transmitter; the data transmitter being arranged to vary the variable load to apply a modulation loading pattern for each data symbol transmitted during the communication time intervals, each possible data symbol value of each data symbol being represented by a different modulation loading pattern, the modulation loading pattern for each possible data symbol value comprising/being linked to a load modulation chip sequence, the data transmitter being arranged to control the variable load to apply a repeating loading variation pattern during the non-communication time intervals; wherein the repeating loading variation pattern has a power spectral density that does not differ by more than 10dB from a power spectral density of each of the modulation loading patterns for frequencies below half a frequency of the power transfer signal.

The invention may allow improved performance in many embodiments and may in particular in many embodiments allow improved communication between a power receiver and a power transmitter. The approach may allow, facilitate, or enable improved power transfer in many embodiments.

The approach may in many scenarios allow a reduced impact of load modulation on the power transfer performance and operation. In many embodiments, reduced variation in the properties and operation of the input circuit in extracting power from the power transfer signal may be achieved. A more constant operation may be achieved in many embodiments. A reduced amplitude of the induced voltage and/or of a current of a power transmitter coil generating the power transfer signal, may be achieved in many embodiments. A reduced voltage variation for the load being supplied by the power receiver may be achieved in many scenarios.

During the non-communication time intervals, there may be no communication of information data from the power receiver to the power transmitter. In some embodiments, the data transmitter may be arranged to control the variable load during non-communication time intervals so that the resulting modulation loading does not match any modulation loading pattern that represents a possible data symbol value.

During the communication time intervals, the data transmitter may be arranged to vary the variable load such that the modulation loading pattern represents a data symbol value for the data symbol. Each possible data symbol value may be represented by/linked with one modulation loading pattern with the modulation loading patterns being different for different data symbol values. The data transmitter may be arranged to transmit a first symbol value by controlling the variable load to apply the modulation loading pattern linked with the first symbol value.

The modulation loading is determined by the load value of the variable load. The variable load may be a modulation load with the load modulation being applied to the power transfer signal by the variations in the variable load. The modulation loading may be the (part of the) loading of the power transfer signal that is varied in response to the data symbols being transmitted.

Each communication time interval may correspond to a time interval during which a data packet is transmitted from the power receiver to the power transmitter. Each non-communication time interval may correspond to a time interval between the communication time intervals. Each non-communication time interval may correspond to a time interval during which no data packet is transmitted from the power receiver to the power transmitter.

The power spectral densities may be low pass filtered values, such as values that are averaged over a time interval/range and/or over a frequency interval/range. Such a time interval/range may have a duration not less than 0.1msec, 1 msec, or 10msec in many embodiments. Such a frequency interval/range may have a range not less than 10Hz, 100Hz, 1 kHz, or 10 kHz in many embodiments.

In some embodiments, the data transmitter may be arranged to control the variable load to repeatedly change the modulation loading during non-communication time intervals such that a difference between an average modulation loading during the non-communication time intervals and an average modulation loading during the non-communication time intervals differs by less than 10% of a maximum modulation loading change during the communication time intervals.

This may provide improved performance in many embodiments. It may in many scenarios ensure a low voltage variation of the induced signal and the supply voltage to the load. The approach may reduce, mitigate, or in some cases substantially remove transient effects in properties or operating points occurring at the start of communication time intervals.

According to an optional feature of the invention, the repeating loading variation pattern is a modulation loading pattern for a first data symbol value.

This may allow improved performance in many embodiments. It may in many scenarios allow facilitated and/or reduced complexity implementation and/or operation. It may in particular ensure a close spectral consistency between communication time intervals and non-communication time intervals.

According to an optional feature of the invention, the data transmitter is arranged to transmit a start bit indicating a start of a data transmission, the start bit being a modulation loading pattern for second data symbol value being different than the first data symbol value.

This may provide advantageous operation in many embodiments and may facilitate communication.

According to an optional feature of the invention, the repeating loading variation pattern is different from all modulation loading patterns.

This may be highly advantageous in many embodiments. It may for example in many cases allow facilitated and/or improved differentiation between data communication and non-data load modulation/variation. It may for example allow facilitated and/or improved synchronization of the power transmitter to the communication time intervals and non-communication time intervals.

According to an optional feature of the invention, the repeating loading variation pattern has a normalized absolute cross correlation with each modulation loading pattern for each possible data symbol value of no more than 0.7.

This may provide particularly advantageous operation and/or implementation in many embodiments.

According to an optional feature of the invention, the data transmitter is arranged to include a synchronization loading variation pattern between a transmission of the repeating loading variation pattern and a transmission of the modulation loading pattern, the synchronization loading variation pattern being different from all modulation loading patterns and from the repeating loading variation pattern.

This may provide particularly advantageous operation and/or implementation in many embodiments. It may in particular allow improved timing synchronization of the communication and receive operation of the power transmitter.

According to an optional feature of the invention, the synchronization loading variation pattern is an inverse pattern of the repeating loading variation pattern.

This may provide particularly advantageous operation and/or implementation in many embodiments.

According to an optional feature of the invention, the synchronization loading variation pattern has a normalized absolute cross correlation with each modulation loading pattern for each possible data symbol value of no more than 0.7.

This may provide particularly advantageous operation and/or implementation in many embodiments.

According to an optional feature of the invention, the repeating loading variation pattern and the modulation loading patterns have identical lengths.

This may provide particularly advantageous operation and/or implementation in many embodiments.

According to an optional feature of the invention, each of the repeating loading variation pattern and the modulation loading patterns are formed by a sequence of chips selected from a set of chips.

This may provide particularly advantageous operation and/or implementation in many embodiments.

According to an optional feature of the invention, the set of chips consists in two chips linked with inverse modulation loading patterns.

This may provide particularly advantageous operation and/or implementation in many embodiments.

According to an optional feature of the invention, the repeating loading variation pattern is selected for a modulation load variation of the power transfer signal to have a power difference between neighboring communication time intervals and non-communication time intervals of no less than 10dB for any frequency interval of not less than a tenth of the power transfer signal frequency and within a frequency range from half the power transfer signal frequency to twice the power transfer signal frequency.

This may provide particularly advantageous operation and/or implementation in many embodiments.

According to an optional feature of the invention, the repeating loading variation pattern is selected to have a power spectral density that does not differ by more than 10dB from a power spectral density of each of the modulation loading patterns for frequencies below the frequency of the power transfer signal.

This may provide particularly advantageous operation and/or implementation in many embodiments.

According to an optional feature of the invention, the repeating loading variation pattern is selected to have a power spectral density that does not differ by more than 3 dB from a power spectral density of each of the modulation loading patterns for frequencies below half the frequency of the power transfer signal.

This may provide particularly advantageous operation and/or implementation in many embodiments.

In some embodiments, the repeating loading variation pattern is selected for a modulation load variation of the power transfer signal to have a spectral shape that varies by no more than 10% in a frequency range from half a frequency of the power transfer signal to twice a frequency of the power transfer signal between the communication time intervals and the non-communication time intervals.

In some embodiments, the repeating loading variation pattern is selected such that a normalized variance of a ratio between a power spectral shape of a modulation load variation of the power transfer signal during communication time intervals and a power spectral shape of the modulation load variation of the power transfer signal during non-communication time intervals deviates from a constant value by no more than 10%, the normalized variance being for a frequency range in a frequency range from half a frequency of the power transfer signal to twice a frequency of the power transfer signal.

In some embodiments, a difference in an energy of the modulation load variation in a first frequency range differs by no more than 10% between communication time intervals and non-communication time intervals; the first frequency range being a range from the frequency of the power transfer signal to twice the frequency of the power transfer signal.

In some embodiments, the repeating loading variation pattern is selected such that a normalized variance of a ratio between a power spectral shape of a modulation load variation of the power transfer signal during communication time intervals and a power spectral shape of the modulation load variation of the power transfer signal during non-communication time intervals deviates from a constant value by no more than 10%, the normalized variance being for a frequency range in a frequency range from a quarter a frequency of the power transfer signal to four times a frequency of the power transfer signal.

In some embodiments, the repeating loading variation pattern is selected such that a normalized variance of a ratio between a power spectral shape of a modulation load variation of the power transfer signal during communication time intervals and a power spectral shape of the modulation load variation of the power transfer signal during non-communication time intervals deviates from a constant value does not exceed 5%, the normalized variance being for a frequency range in a frequency range from half a frequency of the power transfer signal to twice a frequency of the power transfer signal.

According to an aspect of the invention there is provided a method of operation for a power receiver wirelessly receiving power from a power transmitter via an electromagnetic power transfer signal, the power receiver comprising: an input circuit comprising a receiver coil arranged to extract power from the power transfer signal; a variable load coupled to the input circuit and arranged to apply a modulation loading to the input circuit; and the method comprising: transmitting data symbols to the power transmitter by controlling the variable load to load modulate the power transfer signal during communication time intervals that are interspersed by non-communication time intervals during which no data is transmitted to the power transmitter; the transmitting including varying the variable load to apply a modulation loading pattern for each data symbol transmitted during the communication time intervals, each possible data symbol value of the data symbols being represented by a different modulation loading pattern, the modulation loading pattern for each possible data symbol value representing a load modulation chip sequence, and controlling the variable load to apply a repeating loading variation pattern during the non-communication time intervals, wherein the repeating loading variation pattern is selected to have a power spectral density that does not differ by more than 10dB from a power spectral density of each of the modulation loading patterns for frequencies below half a frequency of the power transfer signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of a power supply path for the power receiver of FIG. 5;
FIG. 7 illustrates an example of a rectified induced voltage provided to a load of a wireless power receiver;
FIG. 8 illustrates an example of a rectified induced voltage provided to a load of a wireless power receiver;
FIG. 9 illustrates an example of chip sequences for data values transmitted from a power receiver to a power transmitter;
FIG. 10 illustrates examples of a rectified induced voltage and a transmitter coil current for different load modulation approaches.

### DETAILED DESCRIPTION OF THE EMBODIMENTS

The following description focuses on embodiments of the invention applicable to a high power wireless power transfer system utilizing a power transfer approach such as known from the Qi Specification. However, it will be appreciated that the invention is not limited to this application but may be applied to many other wireless power transfer systems.

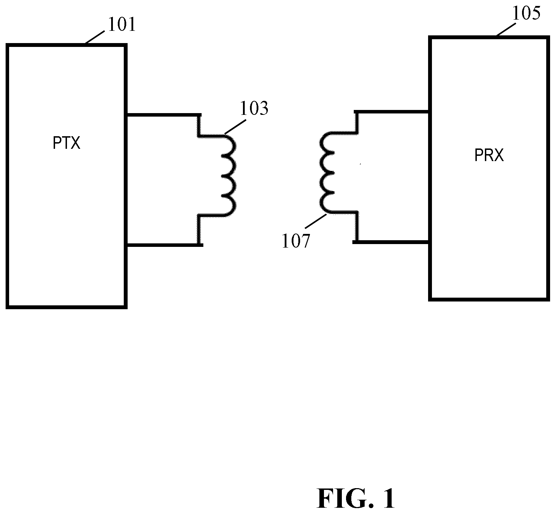

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107. The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. During power transfer, the electromagnetic signal transfers power to the power receiver 105 (and specifically to the receiver coil 107) and it will in the following be referred to as the power transfer signal.

The power transfer signal may typically have a frequency between around 20 kHz to around 1 MHz, and often for Qi compatible systems typically in the range from 95 kHz to 400 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.3, 2.0, 2.1, Up to 25W for Qi specification version 2.2. Power transfer levels may even be in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements). Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

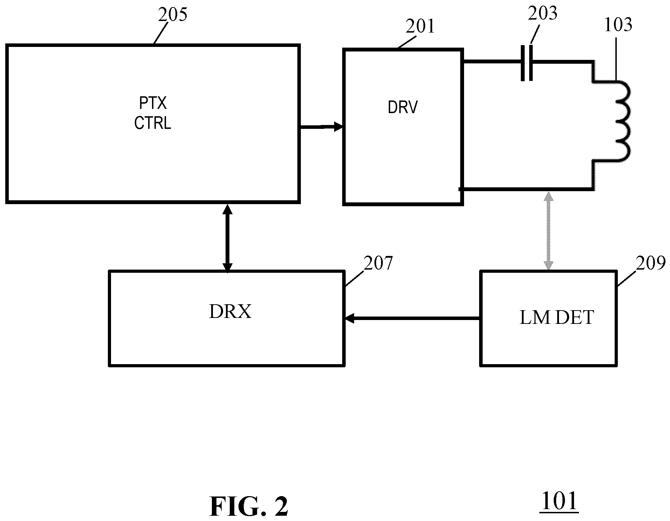

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

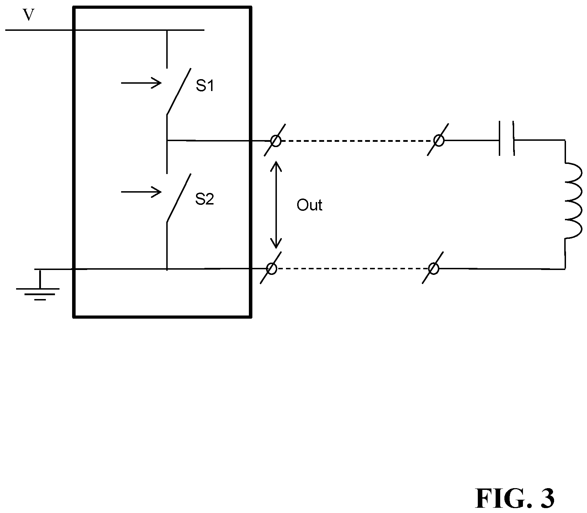

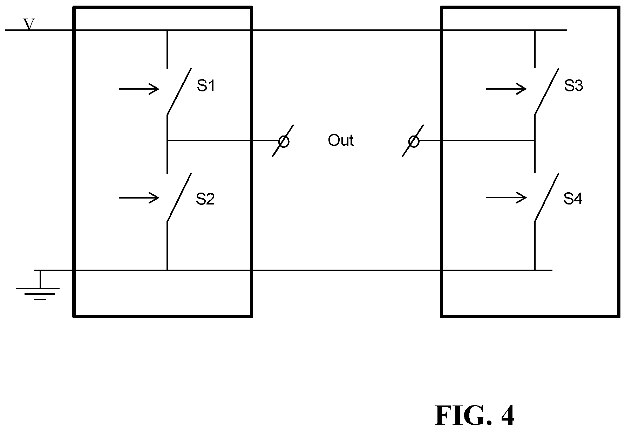

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

The power transmitter 101 further comprises a data receiver 207 which is arranged to receive data transmitted to the power transmitter 101 from the power receiver 105. The data is transmitted by load modulation where the power receiver 105 changes a loading of the power transfer signal in accordance with data symbols being communicated.

The data transmission from power receiver to power transmitter may specifically use an approach in line with a Direct Sequence Spread Spectrum (DSSS) modulation approach which uses a chip sequence to modulate the data symbols. The data symbols/ bits are modulated by a (typically pseudorandom) bit sequence also referred to as a spreading sequence. Each spreading-sequence bit, which is known as a chip, has a much shorter duration (larger bandwidth) than the original message bits. Each data symbol is accordingly linked with a specific chip sequence which maps to a particular loading variation pattern for the load modulation of the power transfer signal (or potentially of a separate communication carrier).

The data receiver 207 is coupled to a load modulation detector 209 which is coupled to the output circuit 103, 203 and which is arranged to detect variations in/ perform measurements of the load of the power transfer signal and to generate a received chip sequence based on the variations/measurements. The load modulation detector 209 may specifically measure the loading of the power transfer signal by measuring a power, current, and/or voltage for the transmitter coil 103. It may specifically sample the load at given sample instants and determine the load value for the sample times accordingly. The data receiver 207 is arranged to determine received data symbols based on the detected loading values. Specifically, the load modulation detector 209 may determine received chip sequences from the measured load values and the data receiver 207 may determine the received data symbol as the data symbol that with highest probability would result in the received chip sequence (maximum likelihood demodulation). It will be appreciated that many different approaches for receiving load modulation will be known to the skilled person.

The received data symbols are fed from the data receiver 207 to the power transmitter controller 205 which may adapt the operation of the power transfer in response to this data. For example, power error data may be received and the power transmitter controller 205 may adapt the power level of the drive signal thereby implementing a power control loop with the power receiver 105.

In many embodiments, the power transmitter controller 205 is further arranged to communicate data to the power receiver by controlling the driver 201 to modulate the drive signal, and thus the power transfer signal, to reflect the transmitted data. Such modulation may for example be frequency, amplitude and/or phase modulation. In many practical applications, such as in Qi systems, Amplitude Shift Keying (ASK) modulation is used.

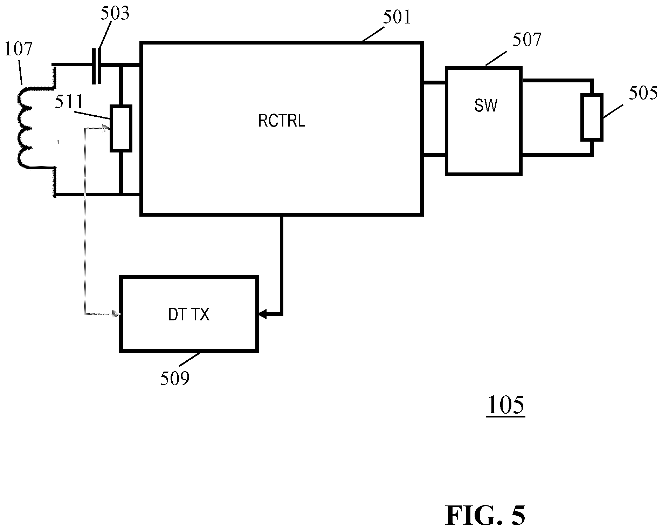

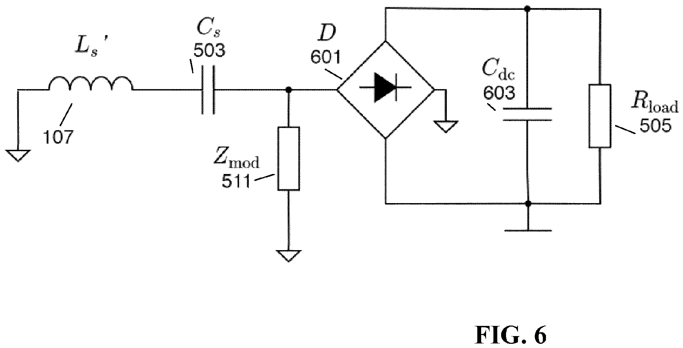

FIG. 5 illustrates some exemplary elements of the power receiver 105 and FIG. 6 illustrates a simplified equivalent circuit for the corresponding power transfer path.

In the example, the receiver coil 107 is coupled to a power receiver controller 501 via a capacitor 503 which together with the receiver coil 107 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 501 couples the receiver coil 107 to a load 505 via a switch 507. The power receiver controller 501 includes a power control path which converts the power extracted by the receiver coil 107 into a suitable supply for the load 505. In some embodiments, the power receiver controller 501 may provide a direct power path which simply connects the input resonance circuit to the switch 507 or load 505, i.e. the power path of the power receiver controller 501 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

In addition, the power receiver controller 501 may include various power receiver controller functionality required to perform power transfer, and in particular functions required to perform power transfer in accordance with the Qi or Ki Specifications.

The power receiver 105 is arranged to transmit data to the power transmitter 101. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi Specifications may be transmitted. Messages may comprise one or more data bits/ symbols.

The power receiver is arranged to transmit messages to the power transmitter using load modulation where changes in the loading of the power transfer signal may be introduced by the power receiver where the changes are in accordance with data values to be transmitted. These changes can then be detected by the power transmitter in order to decode the data from the power receiver.

There are typically two main ways of performing load modulation, namely either to directly change the resistive load/ power extraction of the input circuit and/or to detune the resonance of the input circuit e.g. by changing a reactive loading of the input circuit (typically switching a capacitor in/out in line with data to be transmitted). Similar approaches may be used by the power receiver for load modulating the power transfer signal. Thus, load modulation may use real and/or reactive load changes.

Correspondingly, at the power transmitter, detection approaches such as those known for Qi Specification systems may be used to detect the load variations. For example, a direct measurement of a power level or current amplitude of the drive signal may be used as indications of the loading, and thus of the load modulation variations introduced by the power receiver.

The power receiver 105 comprises a data transmitter 509 which is arranged to transmit data to the power transmitter 101 by load modulating the power transfer signal.

In the example, the data transmitter 509 is arranged to control a variable load 511 that provides a modulation loading of the power transfer signal. Variations in the value of the variable load 511 results in a changed effective load provided to the receiver coil 107. As a result, the induced power (real and/or reactive) changes and thus the loading of the power transfer signal by the receiver coil 107 changes. The loading of the receiver coil 107/ the power transfer signal is dependent on the value of the variable load. Specifically, changes in the value of the variable load results in changes in the loading of the power transfer signal. The data transmitter 509 is arranged to load modulate the power transfer signal by varying the value of the variable load thereby varying the modulation loading of the power transfer signal. The modulation loading is a variable loading of the power transfer signal providing the load modulation of the power transfer signal. The modulation loading can be considered to be/correspond to/ represent a load and/or impedance value of the variable load.

Thus, the data transmitter 509 is arranged to change the value of the variable load in dependence on data symbol values being transmitted thereby providing a varying modulation loading of the power transfer signal.

The data transmitter 509 is coupled to the variable load 511 and is arranged to modify this in response to the data symbols to be transmitted. Thus, the data transmitter 509 is arranged to vary the variable load to provide a modulation loading of the power transfer signal. The data transmitter 509 may specifically be arranged to provide a modulation loading pattern for each data symbol where the modulation loading pattern is dependent on the data symbol value. The modulation loading pattern is different for different data symbol values. The power transmitter may accordingly estimate a modulation loading pattern for the power transfer signal and determine the data symbol value based on this detected modulation loading pattern, e.g. by selecting the data symbol value that is most likely to have resulted in the received load pattern (maximum likelihood demodulation).

In many embodiments, the variable load may be a binary variable load having two possible load values. Further, in many embodiments, the variable load may be a purely resistive load or a purely reactive load. For example, the variable load may be a resistor or capacitor that can be switched between being decoupled from the input circuit and being coupled to the input circuit (e.g. effectively being switched on/off). The data transmitter 509 may be arranged to control the switch that switches the resistor/ capacitor in out.

For example, the data transmitter 509 may be arranged to switch in/out a communication capacitor (or other impedance) e.g. positioned in parallel with the power receiver controller 501 or with the resonance capacitor 503 thereby being able to vary the resonance frequency and the loading of the power transfer signal.

The data transmitter 509 may be arranged to transmit data symbols by load modulating the power transfer signal by a modulation loading pattern corresponding to a chip sequence. The data transmitter 509 may transmit the data symbols using an approach that is e.g. similarly to a Direct Sequence Spread Spectrum (DSSS) modulation which uses a chip sequence to modulate the data symbols. The data symbols/ bits are modulated by a (typically pseudorandom) bit sequence also referred to as a spreading sequence. Each spreading-sequence bit, which is known as a chip, has a much shorter duration (larger bandwidth) than the original message bits.

In some embodiments each symbol is represented by a chip sequence comprising a plurality of chips, and typically with a sequence comprising 5 to 1023 chips. Thus, rather than simply varying the load in accordance with each symbol or bit, the data transmitter 509 may be arranged to transmit a given symbol (typically a bit) by a series of load changes and variations where the changes and variations are different for each symbol. Specifically, a chip sequence may be defined for each symbol and when transmitting a given symbol, the data transmitter 509 may retrieve the chip sequence for that specific symbol and proceed to load modulate the power transfer signal in accordance with the chip sequence for the symbol. Each chip sequence is directly linked to a modulation loading pattern which specifically may be the same as the chip sequence.

In some embodiments, the modulation loading pattern for each possible data symbol value may accordingly comprise a load modulation chip sequence of at least 5, and in some cases at least 8,16, or 32, load modulation chips.

Similarly, as will be described in more detail later, the power transmitter may detect the load modulation by considering the whole chip sequence, and specifically may seek to determine the received symbol as the one for which the measured load variation chip pattern most closely matches the chip sequence pattern for that symbol.

Thus, in some embodiments a direct sequence spread spectrum load modulation may be used with each data symbol value being represented by a different chip sequence and associated modulation loading pattern.

Such an approach may in particular allow the modulation depth, i.e. the magnitude of the load variations to be reduced substantially which may for example reduce electromagnetic noise and interference, may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

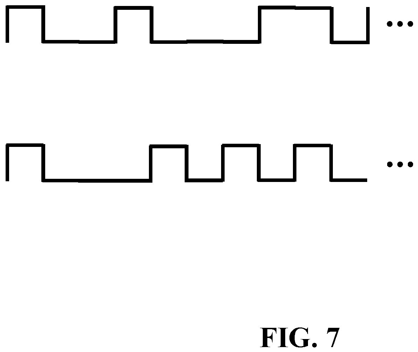

FIG. 7 illustrates an example of parts of two possible chip sequences/ modulation loading patterns. Each chip sequence comprises a sequence of chips. Typically, the set of chip values is two, corresponding to a binary chip sequence. A symbol time is thus divided into a plurality of chip intervals with the chip sequences of the chips being different for different data symbols. Typically, each sequence includes at least ten chips, and often substantially more. In many embodiments, each chip sequence may have a length of 2^{N}-1 where N is an integer of typically no less than 4.

Each of the stored chip sequences is assigned to one symbol. Thus, each possible data symbol value that may need to be transmitted to the power transmitter may have a linked/ associated chip sequence/ modulation loading pattern. For example, where only two data symbols are possible, i.e. where a binary communication is implemented, the set of chip sequences may comprise only two chip sequences. Each possible data symbol value may be linked/ represented by one modulation chip sequence. Thus, for a given data symbol value to be transmitted, the corresponding/ linked modulation chip sequence is determined and modulated on to the power transfer signal by load modulation. For example, where only two data symbols are possible, i.e. where a binary communication is implemented, the set of chip sequences may comprise only two chip sequences.

In many embodiments, the one or more chip sequences may be represented by a relationship to another chip sequence. For example, for binary communication, the data transmitter 509 may store a single modulation chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored/ determined in the data transmitter 509 with the remaining chip sequences being automatically and implicitly stored/ determined as the inverse of these.

Thus, in some embodiments, the modulation chip sequences may include inverse chip sequences. Equivalently, the same modulation chip sequence can be considered to represent two data symbol values, and specifically two binary data symbol values.

The modulation chip sequence is for a given data symbol to be transmitted selected from a set of modulation chip sequences, and in the example the data transmitter 509 provides a set of modulation chip sequences with each chip sequence being linked to a data symbol value. Typically, the set of modulation chip sequences comprises a chip sequence for each possible data symbol value. For example, if binary communication is used, the first set of chip sequences may comprise only two chip sequences. It will be appreciated that the data transmitter 509 may store the chip sequences in any suitable form and does not need to store a full sequence for each possible data symbol. For example, a given modulation chip sequence may be multiplied by a binary symbol value represented by the values 1, -1. At the receiving end, i.e. at the power transmitter, the data value may then be determined by a correlation with the given modulation chip sequence and a determination of the corresponding binary data value dependent on whether this is a positive or negative correlation.

In many embodiments, binary communication may accordingly be used where only two data symbol values are possible (corresponding to a "0" bit value or a "1" bit value). In such cases, one bit value may be represented by a given chip sequence and the other bit value may be associated with the inverse bit sequence, i.e. the bit sequence that results from changing each chip value to the opposite value. The two bit sequences are thus typically complementary with one resulting from the other by multiplication by -1 (with the chip values being represented by +1 and -1).

A particular advantage in such a case is that demodulation is particularly easy as a single correlation can be used to differentiate between bit values as the magnitude of the correlation is the same for the chip sequences, but the signs of the correlation values are opposite.

It will be appreciated that it is equivalent to consider data symbols represented by inverse modulation chip sequences to be represented by one chip sequence or by two chip sequences. It will be appreciated that such a binary approach with two inverse chip sequences being used is equivalent to considering that the two possible binary values are modulated by the same chip sequence but with the data symbols having opposite data values (e.g. +1 and -1).

When the power receiver is about to transmit a data symbol, the value is fed to the data transmitter 509 from the power receiver controller 501 which proceeds to determine the chip sequence that is linked to the data symbol value to be transmitted.

The data transmitter 509 is arranged to modulate the chip sequence onto the power transfer signal. Specifically, a modulation load may be switched in and out (on/off) in line with the chips, i.e. the load may be changed in accordance with the variable load values of the chip sequence/ modulation loading pattern.

Thus, in some embodiments, each chip value may be represented by a single loading value. For example, a binary bit value of "0" may be represented by one loading value and a binary bit value or "1" may be represented by a different loading value, corresponding typically to the modulation load 511 respectively being switched in or out of the circuit. In such cases, the chip sequence/pattern may directly correspond to the modulation loading pattern. In many embodiments, such as many Qi based embodiments, each chip may be represented by two load patterns with the chip value being represented by the change of modulation loadings for a specific chip value. For example, a binary bit value of "0" may be represented by a change from a first value to a second value and a binary bit value of "1" may be represented by a change from the second value to the second value. For example, for one binary chip value, the modulation load 511 may be coupled in from the start of the chip time interval and then be decoupled/disconnected halfway through the chip time interval. Thus, for this chip value, the modulation load may be coupled to the receiver coil 107 for the first half of the chip time interval and decoupled from the receiver coil 107 for the second half of the chip time interval. For the other binary chip value, the modulation load 511 may be decoupled from the start of the chip time interval and then be coupled in/connected halfway through the chip time interval. Thus, for this chip value, the modulation load may be decoupled from the receiver coil 107 for the first half of the chip time interval and coupled to the receiver coil 107 for the second half of the chip time interval.

Such an approach may allow a facilitated demodulation where the chip values may be determined by detecting a direction of a load change during a chip time interval. If the change is in one direction, the chip value is considered to be a "0" and if it is in the other direction, the chip value is considered to be a "1".

The chip sequence is selected from a set of chip sequences, and in the example the data transmitter 509 stores such a set of chip sequences with each chip sequence being linked to a data symbol value. Typically, the set of chip sequences comprises a chip sequence for each possible data symbol value. For example, if binary communication is used, the first set of chip sequences may comprise only two chip sequences. It will be appreciated that the data transmitter 509 may store the chip sequences in any suitable form and does not need to store a full sequence for each possible data symbol. For example, one or more chip sequences may be represented by a relationship to another chip sequence. For example, for binary communication, the data transmitter 509 may only store a single chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored in the data transmitter 509 with the remaining chip sequences being automatically and implicitly stored as the inverse of these.

Such approaches are known as Differential-DSSS (D-DSSS) and tends to provide facilitated and improved demodulation and communication in such scenarios. Further, in the example, the modulation loading pattern may be directly linked/given by the corresponding chip sequence for the data value but may be different and typically have more load changes than the number of chips.

In some embodiments, each chip of a load modulation chip may thus be represented by a modulation load transition occurring during the chip. Each load modulation chip thus comprises at least two different modulation loading values/ values of the variable load. For example, as for a differential data symbol modulation, the individual chips may be modulated by a bi-state transition approach. For example, one chip value may be represented by a transition from a lower modulation loading to a higher modulation loading and another chip value may be represented by a transition from a higher modulation loading to a lower modulation loading. In such examples, each chip sequence may be represented by a modulation loading pattern that has two modulation loading values for each chip.

The approach of using such DSSS or D-DSSS type communications may provide a number of advantages. The approach may in particular allow the modulation depth, i.e. the magnitude of the load variations to be reduced substantially which may for example reduce electromagnetic noise and interference. It may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

The data transmitter 509 may be coupled to the power receiver controller 501 and may be arranged to receive data from the power receiver controller 501 for transmission to the power transmitter 101.

For example, the data transmitter 509 may receive power error control data from the power receiver controller 501 and may transmit corresponding power error control messages to the power transmitter 101 using load modulation. In operation, the system is typically arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

The power path of the power receiver may specifically have a simplified equivalent circuit corresponding to the circuit shown in FIG. 6. The input circuit 107, 503 is coupled to a rectifier 601, the output of the rectifier 601 is coupled to a smoothing capacitor 603. The load 505 is coupled to the smoothing capacitor 603.

The output level, and specifically the voltage provided to the load, thus depends directly on the level of the power transfer signal/ the electromagnetic field strength. The power control loop implemented by the power control loop provides continuous and dynamic adaption of the level of the power transfer signal to provide the desired power to then load. For example, the voltage at the smoothing capacitor may be measured and if it drops below a lower threshold, power up messages may be transmitted to the power transmitter 101 increasing the level of the power transfer signal. If the capacitor voltage increases above a higher threshold, power down messages may be transmitted to the power transmitter 101 resulting in this reducing the level of the power transfer signal.

In the approach, data communication is performed in communication time intervals that are interspersed with non-communication time intervals in which there is no transmission of data symbols/ information data from the power receiver to the power transmitter.

In the approach, the data symbols are during the communication time intervals communicated to the power transmitter using load modulation. Thus, during the communication time intervals, the data transmitter 509 is arranged to vary the variable load to apply a modulation loading pattern to the input circuit/ power transfer signal where the modulation loading pattern is dependent on the data symbol value to be transmitted as previously described.

During a communication time intervals, a plurality of data symbols, and specifically bits, may be transmitted, and often a data packet is transmitted. In many embodiments, a communication time interval may have a duration no less than 1 µsec and no more than 1 msec. In many embodiments, no less than 24 bits and in some cases no more than 48 bits may be transmitted during each communication time interval.

Thus, during a communication time interval, load modulation is used to communicate data from the power receiver to the power transmitter and thus a plurality and often many loading transitions occur. Typically, these occur relatively rapidly/ frequently, and in many embodiments the load transitions may be such that the average loading/ value of the variable load is substantially the same for all communication time intervals, and in some cases even for each modulation loading pattern.

However, whereas load modulation is an effective communication technique for wireless power transfer system, the Inventors have realized that it also has some disadvantages, and in particular that the communication approach may interfere with the power transfer operation. Specifically, the load modulation may cause variations in the signal extracted by the input circuit that may result in variations in the power/voltage provided to the load.

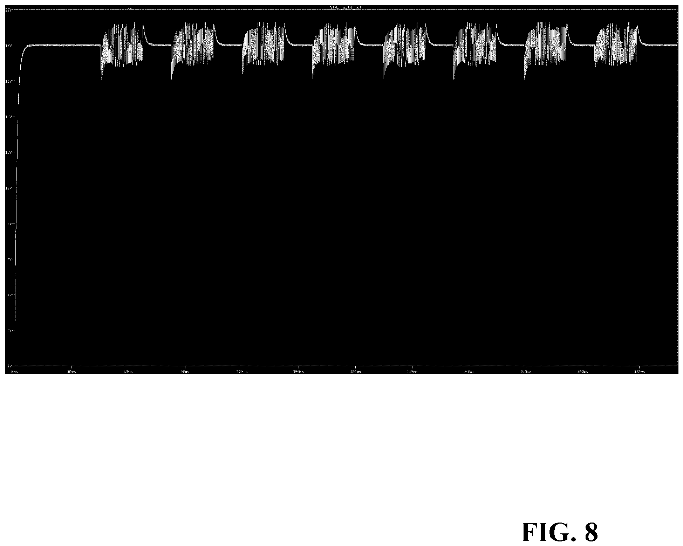

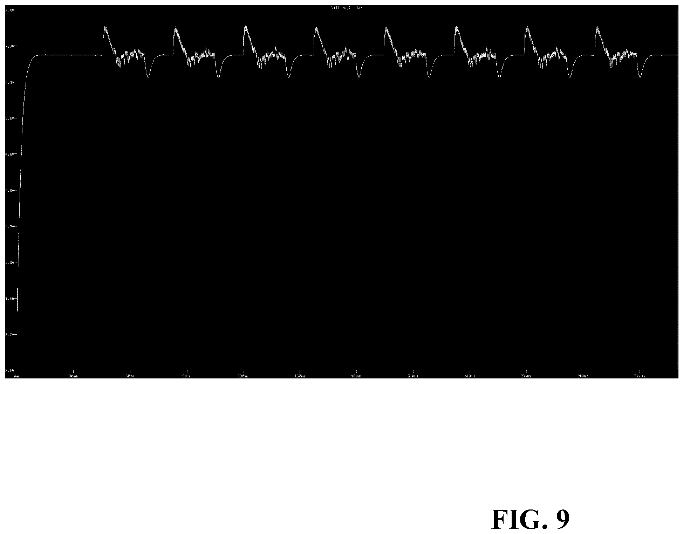

FIGs. 8 and 9 illustrate an example of the voltage that may be provided to the load 505 for a power path such as the one shown in FIG. 6. In most wireless power transfer system, data is transmitted in data packets, and FIG. 7 illustrate examples where such data packets are transmitted by switching a modulation capacitor of 10nF to be respectively disconnected and coupled to the output of the input circuit respectively. FIG. 7 shows an example for an 18 V, 30 W load and with a relatively high coupling and FIG. 8 shows an example for a 7V, 0.1 W load and with a relatively low coupling.

In the examples, it can be seen that the load modulation data packets cause voltage (and thus power) variations in the rectified induced voltage which may be provided to the load. In some applications, such voltage variations may be acceptable but in many practical applications they are highly undesirable. Voltage variations may for example introduce noise or may in some cases result in malfunction of a device or apparatus provided power by the power receiver 105 (i.e. a device or apparatus being the load 505 for the power receiver 105).

In the described approach, no data symbols and no information are communicated during non-communication time intervals. However, despite no communication of information, the data transmitter 509 is arranged to control the variable load to repeatedly change the modulation loading during non-communication time intervals. The data transmitter 509 may specifically be arranged to apply a repeating loading variation pattern that includes multiple loading transitions. For example, a repeating loading variation pattern may be applied by the data transmitter 509 during the non-communication time intervals.

In many embodiments, the loading variations during the non-communication time intervals may be arranged to have substantially the same (average) properties as loading variations that occur during the communication time intervals. For example, the repeating modulation loading pattern may be designed to have properties such that the average modulation loading is the same as for the modulation loading patterns for the data symbols and with the same average time between loading transitions/ changes as for the communication time intervals.

Accordingly, in the approach, modulation loading variations not only occur during the communication time intervals but are also continued into the non-communication time intervals, and in many cases such that at least average or typical properties of the loading variations are continued into the non-communication time intervals.

Such an approach may reduce the impact and specifically the variations to the power transfer caused by load modulation, and specifically may reduce the voltage variations.

In particular, when starting load modulation in accordance with the conventional approach, a step or transient occurs due to the change in the modulation load, and specifically due to this resulting in an average total loading of the input circuit. Specifically, when the variable load is a reactive load, the variation of the load results in a change of the effective resonance frequency of the input circuit. This change in the resonance frequency results in a change in the power transfer and in the output voltage to the load. Thus, when starting the load modulation, the average resonance frequency of the input circuit changes which results in a step effect as can be seen e.g. in FIG. 8. The step effect remains for as long as the data packet is transmitted. However, in examples where power control is operative and sufficiently fast to affect the voltage during data packets, the average voltage may be returned to the desired level by the power control loop. However, in such cases a disadvantageous transient may occur at the start and end of each data transmission. The transient effect is present until the system adapts to the modified average operating point. An example of such transient effects is illustrated in FIG. 8 where it can be seen that the average voltage is returned to the desired level during and after a data transmission.

However, whereas it would intuitively be considered counterintuitive to vary the modulation load when no data is to be transmitted due to the voltage variations incurred for every load change as well as due to the increased complexity of operation, the current approach may introduce a dummy load modulation variation during the non-communication time intervals by proceeding to load modulate the power transfer signal using a repeating loading variation pattern. As a result the step and/or transients at the start of the communication time intervals may be reduced, and even potentially be substantially removed.

The repeating loading variation pattern corresponds to a sequence of values of the variable load/ modulation loading that are repeated during the communication time intervals. The repeating loading variation pattern may specifically be chip sequence and may be one that has the same timing properties as the data symbol chip sequences. For example, it may have the same length and have load transitions/ changes at corresponding times (e.g. the load may only change at the beginning of a communication time interval, or midway through a chip duration if differential/ modulation of each chip is used). Such an approach may for example allow low complexity as effectively the same functionality may be used during the communication time intervals and the non-communication time intervals.

The exact modulation variations during the non-communication time intervals will depend on the requirements and preferences of the individual embodiment, and specifically the effect that is desired. In many embodiments, the data transmitter 509 is arranged to control the variable load to repeatedly change the modulation loading during non-communication time intervals such that the average value of the variable load/ the average modulation loading is substantially the same during communication time intervals and non-communication time intervals.

In some embodiments, the data transmitter 509 may be arranged to only keep the average load/ modulation loadings substantially the same. This may typically allow a substantial reduction in e.g. voltage variations while still allowing a relaxed and low complexity operation during the non-communication time intervals. In many embodiments, the approach may for example allow predetermined and fixed load variation patterns to be used during the non-communication time intervals.

In many embodiments, the data transmitter 509 may be arranged to control the variable load to repeatedly change the modulation loading during non-communication time intervals such that a difference between the average modulation loading (and the average values of the variable loads) during the non-communication time interval and communication time intervals differ by less than 10% of the maximum modulation loading change/ variation that may occur during the communication time intervals. The maximum variation/ change of the modulation loading during a communication time interval is the difference between the minimum modulation loading and the maximum modulation loading for the data symbols. The modulation loading may be considered to correspond to the values of the variable load, and thus the minimum and maximum modulation loading may in many embodiments be equivalent to the minimum and maximum values of the variable load for the data symbols. The maximum modulation loading may be the highest modulation loading and the minimum modulation loading may be the lowest modulation loading possible for all the possible data symbol values.

Typically, the variable load, and thus the modulation loading, has only a limited number of possible values. Indeed, often binary operation is used with the variable load and the modulation loading having only two possible values (and with each data symbol being represented by a different pattern/ sequence of such two possible values. In that case, the maximum load value/ modulation loading corresponds to one of the two possible values and the minimum load value/ modulation loading corresponds to the other. Thus, the maximum modulation loading change/ variation, corresponding to the difference between the maximum and minimum modulation loading, is simply the difference between these values.

Thus, in many embodiments, the switching of the variable load is during the non-communication time intervals such that the average modulation loading/ variable load value is less than 10% of such a difference. In some embodiments, it may even be maintained to be less than 1% or 5% of such a value.

Such an approach may thus allow that the change in average modulation loading when entering a communication time interval is relatively low and thus may contribute to a reduce transient in the power transfer operating point, and specifically the voltage.

However, the inventors have realized that particular advantageous operation may be achieved by selecting the repeating loading variation pattern to have spectral properties that within a given frequency range are identical, or sufficiently similar, to the spectral properties of the modulation loading patterns. This may in particular, but not exclusively, be advantageous in combination with a selection of repeating loading variation patterns having time domain properties as indicated above, i.e. in particular in combination with e.g. an average modulation load being substantially the same for the repeating loading variation pattern as for the modulation loading patterns.

In particular, the power receiver is arranged to employ a repeating loading variation pattern that has a power spectral density which does not differ by more than 10dB, and in some embodiments no more than 6dB or 3dB, from a power spectral density of each of the modulation loading patterns for frequencies below half the frequency of the power transfer signal, or indeed in some embodiments for frequencies below the frequency of the power transfer signal.

The frequency of the power transfer signal may specifically be the dominant frequency of the power transfer signal, and specifically may be the frequency of the strongest frequency component in the power transfer signal. The frequency corresponds to the equivalent frequency of the drive signal, and is typically the same as the switch frequency of the switch elements of the output circuit of the driver 201. The frequency of the power transfer signal may as previously mentioned be in the range from 95 kHz to 400 kHz.

In some cases, the power spectral density may be a density that is averaged over a frequency window of 10Hz, 100Hz, 500Hz, 1kHz, 10kHz.

In some embodiments, the power receiver is arranged to employ a repeating loading variation pattern that has a power spectral density which does not differ by more than 10dB, and in some embodiments no more than 6dB or 3dB, from a power spectral density of each of the modulation loading patterns for frequencies below 50kHz, 100kHz, 200kHZ, or 400 kHz.

The application of the repeating loading variation pattern may result in a modulation load variation being introduced to the power transfer signal not only during the communication time intervals but also during the non-communication time intervals. The selection/design of the repeating loading variation pattern is such that the spectral properties, and specifically the spectral shape, of this modulation load variation is sufficiently similar for the repeating loading variation pattern and the modulation loading patterns, and thus for the communication time interval and the non-communication time interval.

In some embodiments, the repeating loading variation pattern is selected for a modulation load variation of the power transfer signal to have a spectral shape that varies by no more than 10% in a frequency range from half a frequency of the power transfer signal to twice a frequency of the power transfer signal between adjacent communication time intervals and non-communication time intervals.

In many embodiments, the repeating loading variation pattern is selected such that a normalized variance of a ratio between a power spectral shape of a modulation load variation of the power transfer signal during communication time intervals and a power spectral shape of the modulation load variation of the power transfer signal during an adjacent non-communication time interval deviates from a constant value by no more than 10% (or in some cases only 2% or 5%), the normalized variance being for a frequency range in a frequency range from half (or sometimes a quarter or three-quarters of) the frequency of the power transfer signal to twice (or sometimes 1.5 or 3 times) the frequency of the power transfer signal.

In some embodiments, a difference in an energy of the modulation load variation in a first frequency range differs by no more than 10% (or in some cases only 2% or 5%) between a communication time interval and an adjacent non-communication time intervals where the first frequency range is a range from the frequency of the power transfer signal to twice the frequency of the power transfer signal. In other cases, the first frequency range may for example be from ¼, ½ or ¾ of the frequency of the power transfer signal to e.g. 1, 1.5, or 3 times the frequency of the power transfer signal.

In some embodiments, the repeating loading variation pattern is selected such that a normalized variance of a ratio between a power spectral shape of a modulation load variation of the power transfer signal during communication time intervals and a power spectral shape of the modulation load variation of the power transfer signal during non-communication time intervals deviates from a constant value by no more than 10%, the normalized variance being for a frequency range in a frequency range from a quarter a frequency of the power transfer signal to four times a frequency of the power transfer signal.

In many embodiments the repeating loading variation pattern is selected for a modulation load variation of the power transfer signal to have a power difference between neighboring communication time intervals and non-communication time intervals of no more than 10 dB for any frequency interval of not less than a tenth of the power transfer signal frequency and within a frequency range from half the power transfer signal frequency to twice the power transfer signal frequency.

In many embodiments, the repeating loading variation pattern is selected to have a power spectral density that does not differ by more than 10dB from a power spectral density of each of the modulation loading patterns for frequencies below the frequency of the power transfer signal.

In many embodiments, the repeating loading variation pattern is selected to have a power spectral density that does not differ by more than 3 dB from a power spectral density of each of the modulation loading patterns for frequencies below half the frequency of the power transfer signal.

In the approach, the repeating loading variation pattern is accordingly selected to have a power spectral density/spectral shape which is very similar, and often substantially identical, to the power spectral density/spectral shape of the modulation loading patterns. Equivalently, the repeating loading variation pattern is selected/designed such that the resulting load modulation variation of the power transfer signal has a power spectral density/ spectral shape which is very similar, and typically substantially identical to the power transfer signal during the load modulation that communicates data, i.e. the load modulation variation resulting from applying the modulation loading patterns. The close similarity, and particular substantial identity, between the power spectral density/spectral shapes extend over a given frequency interval that extends over a range which has a size not less than half the frequency of the drive signal/power transfer signal.

The inventors have realized that the use of a repeating loading variation pattern that has spectral (power) properties which closely match those of the modulation loading parameters, and thus where the spectral properties of the loading variations during the communication time intervals and the non-communication time intervals closely match and are substantially unchanged, may provide improved performance. In particular, it may reduce the variations of the induced voltage and/or the voltage output of the rectifier rectifying the received power signal. In particular, it may substantially reduce or mitigate voltage transitions at the beginning and end of communication time intervals.

In particular, although approaches such as D-DSSS data modulation may substantially reduce issues with disturbances in e.g. the output voltage resulting from rectifying the induced/extracted voltage and audibility of transmissions of data packets, some of those effects may remain present. Transmitting idle sequences in between transmissions of data packets yields a further reduction of those issues, but still does not remove them entirely, even if the sequences between data transmissions are selected to have similar average or time domain properties. In particular, it may provide improved performance in comparison to a sequence such as a constant D-DSSS chip sequence (for example a constant transmission of either "1" or "0" chips resulting in an alternating loading variation pattern) even if this has the same average loading as the modulation loading patterns.

The current approach of particularly including a spectral shaping for the repeating loading variation pattern such that the spectral properties within a given frequency interval/range does not vary substantially between the communication time intervals and the non-communication time intervals may result in an improved overall performance. Indeed, it has been found to typically allow voltage variations of the induced/rectified voltage to be reduced to substantially negligible levels.

As described, the repeating loading variation pattern may typically be generated as a loading variation pattern that results from/is formed/given by a set of chips with each chip being linked with a specific load pattern. The repeating loading variation pattern may thus result from a given chip sequence using the same chip values (and linked modulation loading patterns) as used to transmit the data (i.e. that are also used for the modulation loading patterns).

In many embodiments, the system may use two chips (i.e. a binary approach) which may particularly have inverse/opposite modulation loading patterns. For example, for one chip value, the modulation load may be switched in for the first half of the chip time interval and out for the second half of the chip time interval whereas for the other chip value the modulation load may be switched out for the first half of the chip time interval and in for the second half of the chip time interval.

In some embodiments, the repeating loading variation pattern may specifically be a modulation loading pattern for a data symbol value. In some embodiments, the repeating loading variation pattern may be set to the same as one of the modulation patterns that are used for transmitting data. In particular, the repeating loading variation pattern may be a pattern for a chip sequence which is a chip sequence for one of the data symbols.

In such cases, the data transmitter 509 may further be arranged to transmit a start pattern which indicates the start of a data transmission. Thus, during the non-communication time interval, the data transmitter 509 may transmit a repeating loading variation pattern that is the same as one of the modulation loading patterns, and when the communication time interval/data transmission starts, a start pattern is first transmitted. The start pattern is modulation loading pattern which is different from the repeating loading variation pattern thereby allowing the power transmitter to detect that a data transmission is beginning.

The start pattern may in many embodiments specifically be a modulation loading pattern for a different data value than the one which is used for the repeating loading variation pattern. For example, for a binary data communication, the modulation loading pattern for one bit value may be used as the repeating loading variation pattern and the maximum power level threshold for the other bit value may be used for the start pattern.

As a specific example, a modulation sequence, i.e. a transmitted chip sequence may be in accordance with the following format/syntax/sequence:
...DDD DDDDDDDDDDD D<data><parity>D D<data> ... <parity> D DDDDDDDDDDD DDD...
In this representation,
- D represents a chip sequence for a first binary data value.
- D represents a chip sequence for a second, different binary data value (with the sequence specifically being the inverse/opposite of the chip sequence for the first data value).
- <data> represents a sequence of e.g. eight data bits, each data bit being encoded by a D and/or D chip sequence.
- <parity> represents a parity bit (e.g. the number of ONEs or ZEROs in <data> modulo two), encoded as a D or D chip sequence

In the example, there is included a start data bit directly preceding the <data> with the start data bit being represented by a chip sequence for the data bit value that is not used for the transmissions during the non-communication time intervals.

In many embodiments, the repeating loading variation pattern may be selected to be different from any of the modulation loading patterns, and specifically may be selected to have a low correlation with all the modulation loading patterns. In particular, in many embodiments, the repeating loading variation pattern may be selected as one that has a normalized absolute cross correlation with each modulation loading pattern for each possible data symbol value of no more than 0.7, or in some embodiments no more than 0.5, or even 0.3. In many embodiments, a maximum absolute cross-correlation of the repeating loading variation pattern and each of the load modulation chip sequences may be no more than 10%, 25%, 50%, or 75%.

Thus, in many embodiments, the repeating loading variation pattern may be such that it is substantially different from any of the modulation loading patterns yet have spectral properties that are substantially the same (at least within a given frequency range). This may facilitate, and in many cases enable, the power transmitter to easily differentiate between load modulation caused by data and load modulation caused by the transmission of the repeating loading variation pattern.

It will be appreciated that different approaches can be used to determine suitable repeating loading variation patterns. For example, the repeating loading variation pattern and modulation loading patterns may be generated as maximum length sequences synthesized with different linear feedback shift registers. The patterns may be generated as maximum length sequences (or to correspond to chip sequences that are maximum length sequences) but with different time offsets. Such patterns and sequences will have low cross correlation while still maintaining high autocorrelation property. Further, such sequences exhibit very similar spectral properties, and in particular tend to have closely matched power spectral densities/spectral shapes.

In some embodiments, the data transmitter 509 is arranged to include a synchronization loading variation pattern between a transmission of the repeating loading variation pattern and a transmission of the modulation loading pattern. This synchronization loading variation pattern may be different from all modulation loading patterns and from the repeating loading variation pattern.

The synchronization loading variation pattern may specifically be designed to have a low normalized absolute cross correlation with the repeating loading variation pattern and/or with the modulation loading pattern for each possible data symbol value of no more than 0.7, or even of no more than 0.5 in many embodiments.

Such a synchronization loading variation pattern may allow the power transmitter to synchronize its operation to the transmissions of the power receiver and may in particular allow the power transmitter to reliably and easily synchronize the communication operation (e.g. both receive and transmit functions) to the communication time interval and non-communication time interval. For example, a phase locked timing loop may be used to provide a local time base at the power transmitter for the communication time intervals and non-communication time intervals. The phase locked time loop may be driven by an error signal that is determined from a difference between an expected time of receipt of the synchronization loading variation pattern and actual times of receipt of the synchronization loading variation pattern.

The use of a separate synchronization loading variation pattern, and in particular one with properties as indicated above, may allow a more reliable and accurate detection, and in particular may allow improved synchronization operation and performance.

In many embodiments, the synchronization loading variation pattern may also be selected to have spectral properties that are close to those of the reference loading parameter and/or the modulation loading patterns. Specifically, all of the comments provided previously with respect to the preferred spectral similarity between the repeating loading variation pattern and the modulation loading patterns may equally apply to the synchronization loading variation pattern and the repeating loading variation pattern and/or to the synchronization loading variation pattern and the modulation loading patterns.

In many embodiments, the synchronization loading variation pattern may specifically be an inverse pattern of the repeating loading variation pattern. This may typically provide the desired spectral similarities and cross-correlations and allow a highly advantageous operation.

As a specific example, a modulation sequence, i.e. a transmitted chip sequence may be in accordance with the following format/syntax/sequence:
...SSS SSSSSSSSSSS D<data><parity>D D<data> ... <parity>D SSSSSSSSSSS SSS...

In which (in addition to the previously described values)
• S represents a chip sequence corresponding to the repeating loading variation pattern, and
• S represents a chip sequence corresponding to the synchronization loading variation pattern, which specifically may be the inverse chip sequence of the repeating loading variation pattern S.

In the example, the repeating loading variation pattern/synchronization loading variation pattern may have low correlation with each other and with the modulation loading patterns. This may allow the demodulator in the power transmitter to easily distinguish between idling transmissions (repeating loading variation pattern transmissions) and data packet transmissions. The synchronization loading variation pattern (specifically the inverted repeating loading variation pattern) clearly marks the start of a data packet transmission.

The approach may provide an improved performance and in particular may allow reduced voltage variation of a voltage generated by rectification of the induced voltage. In the following, a practical example will be presented for three different scenarios:
(a) *No idle sequence.* The power receiver load modulates the power transfer signal only when it is sending a data packet.
(b) *Simple idle sequence.* The power receiver sends a continuous stream of '1' chips when it is not sending a data packet. In the specific example of a D-DSSS scheme as previously described this corresponds to the load modulation being a square wave with a frequency being half of the frequency of the power transfer signal.
(c) *Transmitting a repeating loading variation pattern as described.*

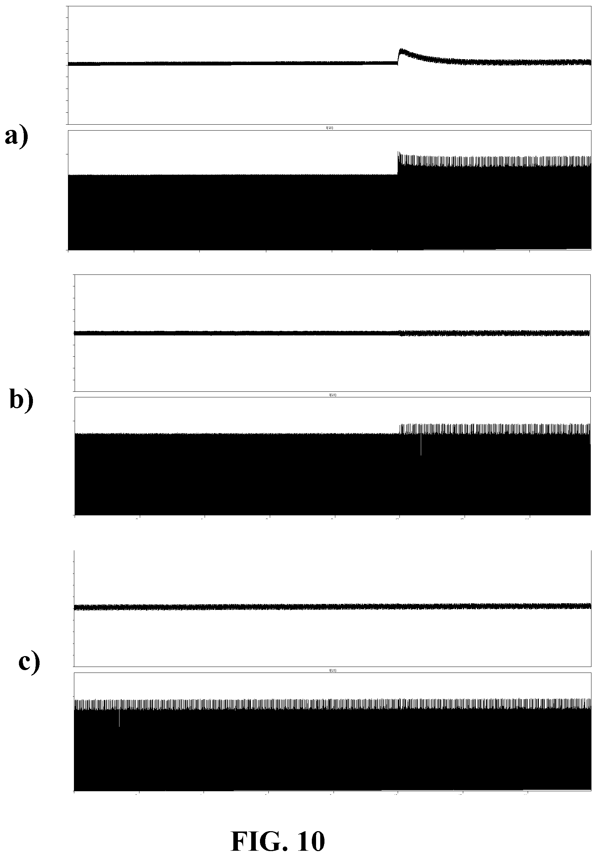

FIG. 10 shows the resulting of the operation in the time domain, i.e. it illustrates time domain signals for respectively the rectified voltage at the power receiver and the transmitter coil current. As can be seen, the start of a data packet is very pronounced when the power receiver does not use an idle sequence during non-communication time intervals. At the operating point used in the example, both the rectified voltage and the power transmitter's coil current show a clear step at the onset of communication. The decay after the step is due to the power control circuit regulating the rectified voltage back to the desired setpoint. (In most existing Qi implementations, the power transmitter disables its power control circuit until after the data packet transmission is complete and accordingly such regulation would not occur).

In case (b) where the power receiver uses a simple idle sequence, the rectified voltage no longer exhibits a pronounced step; but the power transmitter's coil current still does. It is only when the power receiver uses a repeating loading variation pattern as described (with matching spectral properties), that it is no longer possible to observe the start of the packet when viewing the coil current (i.e. in case (c)).

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power receiver (105) for wirelessly receiving power from a power transmitter (101) via an electromagnetic power transfer signal, the power receiver (105) comprising:
an input circuit (107, 503) comprising a receiver coil (107) arranged to extract power from the power transfer signal;
a variable load (511) coupled to the input circuit (107, 503) and arranged to apply a modulation loading to the input circuit (107, 503);
a data transmitter (509) arranged to transmit data symbols to the power transmitter (101) by controlling the variable load (511) to load modulate the power transfer signal during communication time intervals that are interspersed by non-communication time intervals during which no data is transmitted to the power transmitter (101);
the data transmitter (509) being arranged to vary the variable load (511) to apply a modulation loading pattern for each data symbol transmitted during the communication time intervals, each possible data symbol value of each data symbol being represented by a different modulation loading pattern, the modulation loading pattern for each possible data symbol value comprising a load modulation chip sequence, and to control the variable load (511) to apply a repeating loading variation pattern during the non-communication time intervals;
wherein the repeating loading variation pattern has a power spectral density that does not differ by more than 10dB from a power spectral density of each of the modulation loading patterns for frequencies below half a frequency of the power transfer signal.

2. The power receiver of claim 1 wherein the repeating loading variation pattern is a modulation loading pattern for a first data symbol value.

3. The power receiver of claim 2 wherein the data transmitter (509) is arranged to transmit a start bit indicating a start of a data transmission, the start bit being a modulation loading pattern for second data symbol value being different than the first data symbol value.

4. The power receiver of claim 1 wherein the repeating loading variation pattern is different from all modulation loading patterns.

5. The power receiver of claim 4 wherein the repeating loading variation pattern has a normalized absolute cross correlation with each modulation loading pattern for each possible data symbol value of no more than 0.7.

6. The power receiver of any of the previous claims wherein the data transmitter (509) is arranged to include a synchronization loading variation pattern between a transmission of the repeating loading variation pattern and a transmission of the modulation loading pattern, the synchronization loading variation pattern being different from all modulation loading patterns and from the repeating loading variation pattern.

7. The power receiver of claim 6 wherein the synchronization loading variation pattern is an inverse pattern of the repeating loading variation pattern.

8. The power receiver of claim 6 or 7 wherein the synchronization loading variation pattern has a normalized absolute cross correlation with each modulation loading pattern for each possible data symbol value of no more than 0.7.

9. The power receiver of any previous claim wherein the repeating loading variation pattern and the modulation loading patterns have identical lengths.

10. The power receiver of any previous claim wherein each of the repeating loading variation pattern and the modulation loading patterns are formed by a sequence of chips selected from a set of chips.

11. The power receiver of claim 10 wherein the set of chips consists in two chips linked with inverse modulation loading patterns.

12. The power receiver of any previous claim wherein the repeating loading variation pattern is selected for a modulation load variation of the power transfer signal to have a power difference between neighboring communication time intervals and non-communication time intervals of no less than 10dB for any frequency interval of not less than a tenth of the power transfer signal frequency and within a frequency range from half the power transfer signal frequency to twice the power transfer signal frequency.

13. The power receiver of any previous claim wherein the repeating loading variation pattern is selected to have a power spectral density that does not differ by more than 10dB from a power spectral density of each of the modulation loading patterns for frequencies below the frequency of the power transfer signal.

14. The power receiver of any previous claim wherein the repeating loading variation pattern is selected to have a power spectral density that does not differ by more than 3 dB from a power spectral density of each of the modulation loading patterns for frequencies below half the frequency of the power transfer signal.

15. A method of operation for a power receiver (105) wirelessly receiving power from a power transmitter (101) via an electromagnetic power transfer signal, the power receiver (105) comprising:
an input circuit (107, 503) comprising a receiver coil (107) arranged to extract power from the power transfer signal;
a variable load (511) coupled to the input circuit (107, 503) and arranged to apply a modulation loading to the input circuit (107, 503); and
the method comprising:
transmitting data symbols to the power transmitter (101) by controlling the variable load to load modulate the power transfer signal during communication time intervals that are interspersed by non-communication time intervals during which no data is transmitted to the power transmitter; the transmitting including varying the variable load (511) to apply a modulation loading pattern for each data symbol transmitted during the communication time intervals, each possible data symbol value of the data symbols being represented by a different modulation loading pattern, the modulation loading pattern for each possible data symbol value representing a load modulation chip sequence, and
controlling the variable load (511) to apply a repeating loading variation pattern during the non-communication time intervals,
wherein the repeating loading variation pattern is selected to have a power spectral density that does not differ by more than 10dB from a power spectral density of each of the modulation loading patterns for frequencies below half a frequency of the power transfer signal.
